# DEMANDE DE BREVET EUROPEEN

(11) **EP 1 453 167 A1**
(43) Date de publication de la demande: **01.09.2004**
(21) Numéro de dépôt: 04290480.5
(22) Date de dépôt: 23.02.2004
(51) Int. Cl.: H02G 3/04, H02G 3/10

(54) **Plinthe électrique**

(30) Priorité: 26.02.2003 FR 0302367
(71) Demandeur: CASANOVA, 93160 Noisy le Grand (FR)
(72) Inventeur: Nozick, Jacques, 75005 Paris (FR)
(74) Mandataire: CAPRI

(57) **Abrégé**

Plinthe électrique comprenant un rail (1) destiné à être fixé à un mur, et un élément de couvercle (2) destiné à être monté sur le rail, le rail (1) comprenant des moyens d'accrochage (12), (14) et l'élément de couvercle (2) comprenant des moyens de fixation (28, 29) destinés à coopérer avec les moyens d'accrochage par emboîtement vertical en rapportant l'élément de couvercle sensiblement verticalement sur le rail sensiblement parallèlement au mur, caractérisée en ce qu'elle comprend en outre un support de prise (3) destiné à être monté sur le rail (1), ledit support (3) comprenant des moyens de maintien (32) destinés à coopérer avec les moyens d'accrochage (12) du rail (1) par emboîtement vertical en rapportant le support sensiblement verticalement sur le rail sensiblement parallèle au mur.

## Description

La présente invention concerne une plinthe électrique qui sert de chemin de câblage ou plus généralement de distribution électrique de tous types, c'est-à-dire courant fort (230 V.) ou courant faible pour les usages téléphoniques, informatiques ou vidéo. La plinthe électrique est en générale installée sur les murs au niveau du sol, comme une plinthe décorative conventionnelle. La plinthe électrique, en plus de sa fonction de distribution électrique, incorpore également des sorties sous la forme de prises courant faible ou courant fort. Ces prises sont reçues sur ou dans des supports de prise fixés directement sur la plinthe ou au-dessus de la plinthe sur le mur. Ce genre de plinthe électrique est très largement utilisé pour équiper des locaux de bureaux ou des pièces d'habitation d'un réseau électrique courant faible et/ou courant fort.

Une conception classique de plinthe électrique conventionnelle de l'art antérieur comprend un rail destiné à être fixé au mur le long du sol et un élément de couvercle destiné à être monté sur le rail. En outre, des supports de prise peuvent être rapportés soit sur le rail soit sur l'élément de couvercle. Dans une forme conventionnelle, le rail peut se présenter sous la forme d'une goulotte de distribution électrique comprenant un fond et deux branches latérales. Ainsi, la goulotte, en section transversale, présente une forme générale de U. Cette goulotte en U est fixée au mur avec son fond plaqué verticalement contre le mur et une branche latérale s'étendant horizontalement au niveau du sol. L'autre branche s'étend alors à une certaine distance du sol au-dessus de la branche plaquée au sol. Ainsi, l'ouverture de la goulotte est orientée latéralement. L'opérateur chargé du câblage dispose les différents câbles à l'intérieur de la goulotte à travers l'ouverture latérale. Toutefois, les câbles ne sont pas retenus dans la goulotte étant donné que son ouverture est précisément disposée latéralement. De manière classique, l'élément de couvercle est rapporté latéralement sur l'ouverture de la goulotte. En général, les deux bords de l'élément de couvercle coopèrent avec les bords libres des deux branches de la goulotte pour réaliser la fixation de l'élément de couvercle sur la goulotte. En général, on utilise une technique d'encliquetage pour fixer l'élément de couvercle sur la goulotte. Dans certains cas, la goulotte est divisée en plusieurs compartiments longitudinaux destinés à recevoir des câbles de nature différente. Toutefois là encore, l'élément de couvercle est toujours rapporté latéralement sur l'ouverture de la goulotte. Les goulottes compartimentées peuvent également être associées à plusieurs éléments de couvercle rapportés et fixés individuellement sur chaque compartiment. En général, la goulotte ainsi que l'élément de couvercle sont réalisés en matière plastique.

Ce type de plinthe électrique de l'art antérieur présente par conséquent un premier désavantage lié à la disposition des différents câbles à l'intérieur du rail (goulotte), du fait de l'orientation latérale de l'ouverture du rail. Un second désavantage est lié au fait que l'élément de couvercle est rapporté latéralement sur le rail : sa mise en place peut être gênée par des câbles qui ne sont pas bien disposés à l'intérieur du rail.

De l'art antérieur, on connaît les documents DE-202 00446 U1, DE-295 06 436.6 et WO 02/066765. Dans ces documents, il est décrit des plinthes comprenant un rail à fixer un mur et un élément de couvercle qui est mis en place en le rapportant verticalement le long du mur. Le préambule de la revendication 1 est basé sur cet art antérieur.

La présente invention à pour but de remédier aux inconvénients précités de l'art antérieur en définissant une plinthe électrique offrant un espace de réception des câbles plus facile à utiliser et une mise en place de l'élément de couvercle et du support de prise sur le rail qui soit plus simple. L'invention cherche notamment à faciliter la mise en place du support de prise, qui doit être intégré au rail et aux éléments de couvercle adjacents.

Pour atteindre ces buts, la présente invention propose une plinthe électrique ayant les caractéristiques de la revendication 1. Ainsi, l'élément de couvercle et le support de prise sont mis en place et fixés sur le rail de la même manière, en les rapportant par le haut et en les descendant sensiblement verticalement. La mise en place est bien plus facile que celle d'un couvercle ou d'un support de prise de l'art antérieur : en effet, il est bien plus facile d'appuyer de haut en bas que latéralement, surtout lorsque la poussée latérale doit être exercée au niveau du sol, comme c'est le cas pour une plinthe. De ce fait, après la mise en place du rail le long du mur au niveau du sol, il n'y a plus qu'à faire glisser les éléments de couvercle et les supports de prise de haut en bas le long du mur jusqu'à venir en prise avec le rail.

Selon un autre aspect de l'invention, les moyens de maintien du support de prise comprennent un profil de d'ancrage pour une fixation du rail et des éléments de parois destinés à venir en appui sur un ou deux élément(s) de couvercle adjacent(s) et sous-jacentes) monté(s) sur ledit rail. Avantageusement, le support de prise définit intérieurement un espace de lovage de câble. L'espace de lovage permet de garder une longueur de câbles disponibles à l'intérieur du support de prise au cas où la prise devrait être changée d'emplacement le long de la plinthe. Ainsi, par exemple avec une longueur de câbles lovée de 50 centimètres, un déplacement d'un mètre est possible.

Selon une mise en oeuvre avantageuse, la plinthe comprend en outre un support de prise destiné à être monté sur le rail, ledit support comprenant des moyens de maintien destinés à coopérer avec les moyens d'accrochage du rail par emboîtement vertical en rapportant le support sensiblement verticalement sur le rail sensiblement parallèle au mur. Ainsi, les supports de prise sont mis en place sur le rail de la même manière qu'un élément de couvercle, c'est-à-dire en les faisant descendre verticalement le long du mur sur le rail.

Selon un autre aspect de l'invention, l'élément de couvercle masque complètement le rail. Ainsi, on peut travailler au niveau du mur ou au niveau du sol sans risque de salir ou d'abîmer le rail qui sera de toute façon complètement habillé avec l'élément de couvercle. Ceci n'est pas le cas avec les goulottes de l'art antérieur sur lesquels les éléments de couvercle sont rapportés latéralement, de sorte qu'ils ne peuvent pas habiller ou masquer la partie supérieure de la goulotte.

Selon un autre aspect, le rail comprend une partie supérieure destinée à s'étendre le long du mur, l'élément de couvercle contenant une bride d'appui destinée à venir en contact du mur au-dessus de la partie supérieure du rail de manière à la masquer. La bride d'appui, même si elle ne vient pas en contact direct contre le mur, permet cependant d'obtenir un masquage parfait du rail.

Selon une autre caractéristique de l'invention, le rail comprend au moins une bride frontale longitudinale qui s'étend dans un plan sensiblement vertical lorsque le rail est fixé horizontalement à un mur, ladite bride comprenant un bord longitudinal libre formant les moyens d'accrochage. Avantageusement, le rail forme au moins une rigole de distribution de câbles électriques, ladite bride longitudinale formant une partie de ladite rigole, ledit bord longitudinal délimitant une ouverture longitudinale d'insertion de câble dans la rigole de distribution. La bride frontale longitudinale du rail sert ainsi d'élément de rétention permettant de maintenir les câbles à l'intérieur de la rigole. Ceci n'est pas le cas avec les goulottes de l'art antérieur. De préférence, au moins une rigole présente une section transversale verticale en forme de U ou de V disposé debout lorsque le rail est fixé à un mur. Ainsi chaque rigole forme réellement un canal bordé sur les deux côtés de sorte que les câbles sont contenus à l'intérieur de la rigole, à la manière d'un liquide.

Selon un autre aspect de l'invention, le bord libre de la bride forme des moyens d'encliquetage.

Selon une forme de réalisation pratique, le rail forme deux rigoles superposées, chaque rigole comprenant une bride longitudinale frontale formant un bord libre, le bord libre d'une rigole formant les moyens d'encliquetage et le bord libre de l'autre rigole formant des moyens de retenue. Avantageusement, le rail se présente en section transversale verticale sous la forme de deux U ou V debout superposés.

Selon un autre aspect de l'invention, les moyens de fixation de l'élément de couvercle comprennent au moins un profil de fixation destiné à coopérer avec le bord libre de ladite au moins une bride frontale du rail. Avantageusement, un profil de fixation comprend une cornière d'encliquetage destinée à venir en prise encliquetée avec un bord de bride correspondant formant des moyens d'encliquetage correspondants. Avantageusement, un profil de fixation comprend une cornière de retenue destinée à venir en prise avec un bord de bride correspondant formant des moyens de retenu correspondants. De préférence, l'élément de couvercle comprend une face avant et une face arrière, une extrémité supérieure et une extrémité inférieure, ledit au moins un profil de fixation fait saillie à partir de la face arrière, un intervalle étant présent entre la face arrière et le rail au niveau d'au moins un profil de fixation. Avantageusement, l'élément de couvercle comprend deux profils de fixation, un profil supérieur et un profil inférieur, la face arrière étant en contact du rail au niveau d'un profil. De préférence, l'élément de couvercle forme une bride d'appui destinée à venir en appui contre le mur au-dessus dudit rail, le profil inférieur étant en prise avec le rail de manière à solliciter le profil supérieur en éloignement du rail. Ainsi, par un seul et même déplacement de haut en bas le long du mur, un profil de fixation vient s'encliqueter sur le rail et l'autre profil de fixation vient se loger derrière la bride du rail. Le point dur réalisé par l'encliquetage peut facilement être surmonté en appuyant un peu plus fort vers le bas en se servant soit du poids du corps soit du pied. L'intervalle existant entre la face arrière de l'élément de couvercle et la bride du rail permet de créer une élasticité au niveau de l'élément de couvercle qui permet un maintien stable de l'élément de couvercle sur le rail mais également un retrait aisé de l'élément de couvercle du rail. L'élément de couvercle peut ainsi être mis en place sur le rail à la manière d'une guillotine. L'élément de couvercle vient obturer les deux ouvertures latérales des rigoles avec les câbles assurément logés dans les rigoles.

L'invention sera maintenant plus amplement décrite en référence aux dessins joints donnant à titre d'exemple non limitatif un mode de réalisation de l'invention.

Sur les figures :
la figure 1 est une vue en coupe transversale verticale à travers un rail de plinthe électrique selon l'invention,
la figure 2 est une vue similaire à celle de la figure 1 avec un élément de couvercle en prise avec le rail,
la figure 3 est une vue similaire aux vues précédentes avec en plus un support de prise monté sur le rail,

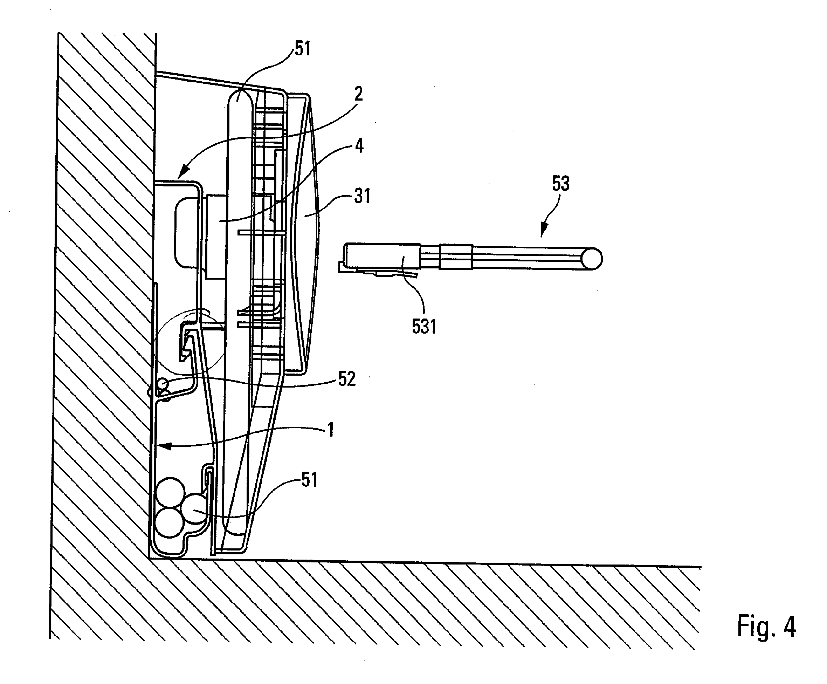

la figure 4 est une vue en coupe transversale verticale à travers une plinthe électrique selon l'invention montée sur un mur au niveau du sol,
la figure 5 est une vue de face d'une plinthe électrique selon l'invention,
la figure 6 est une vue de derrière en transparence d'une plinthe électrique selon l'invention.

La plinthe électrique comprend deux élément constitutif essentiel, à savoir un rail 1 et un élément de couvercle 2. La plinthe électrique comprend avantageusement également un support de prise 3.

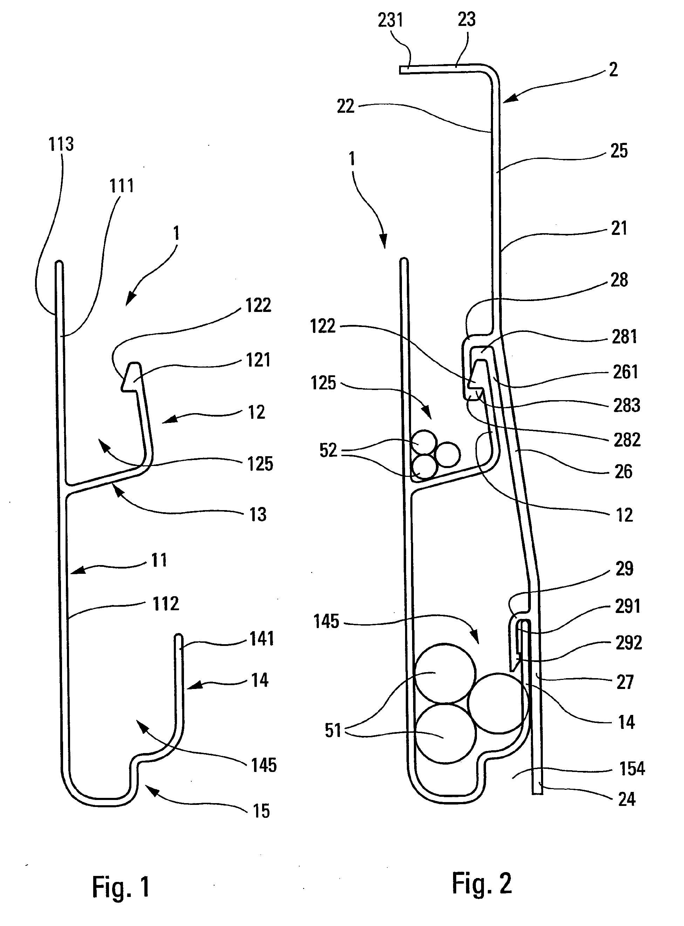

Le rail 1 peut être réalisé en matière plastique ou en métal, par exemple en aluminium extrudé. Le rail se présente alors sous la forme d'un profilé longitudinal présentant une section transversale verticale représentée sur la figure 1. Le rail 1 comprend un fond 11 dont la face arrière est destinée à être en contact d'un mur. Le fond 11 peut par exemple être pourvu de trous permettant le passage de vis pour fixer ainsi le rail à un mur. La face arrière du fond 11 peut être parfaitement ou sensiblement plane. On peut également prévoir que le fond 11 forme une ou plusieurs nervure(s) de renforcement longitudinale(s) dans le but de renforcer la structure et la rigidité du rail.

Le rail comprend également deux brides frontales longitudinales 12 et 14 reliées au fond 11 par deux âmes respectives 13 et 15. L'âme supérieure 13 est reliée par une extrémité au fond 11 et se prolonge au niveau de son autre extrémité pour former la bride frontale longitudinale supérieure 12. De manière sensiblement similaire, l'âme inférieure 15 relie, par une de ses extrémités, l'extrémité inférieure du fond 11 et se prolonge au niveau de son autre extrémité pour former la bride frontale longitudinale inférieure 14. Les âmes 13 et 15 s'étendent sensiblement horizontalement à partir du fond 11. Les brides 12 et 14 s'étendent sensiblement verticalement. Toutefois, la bride supérieure 12 est légèrement inclinée vers le fond 11. Les brides 12 et 14 sont reliées aux âmes 13 et 15 au niveau de leurs extrémités inférieures alors que leurs extrémités supérieures définissent des bords libres longitudinaux 121 respectivement 141. Le bord libre 141 peut être réalisé de manière très simple alors que le bord libre 121 est réalisé avec un profil d'encliquetage 122 dirigé vers le fond 11.

Le fond 11 peut être fictivement divisé en deux parties, à savoir une partie supérieure 111 et une partie inférieure 112. La limite entre la partie supérieure 111 et la partie inférieure 112 est matérialisée par l'endroit où l'âme 13 se connecte au fond 11. Ainsi, en se référant à la figure 1, on peut voir que la partie supérieure 111 ensemble avec l'âme 13 et la bride 12 forment une rigole supérieure 125. De manière similaire, la partie inférieure 112 ensemble avec l'âme 15 et la bride 14 forment une rigole 145. Chaque rigole 125 et 145 présente une forme générale en U, c'est-à-dire avec une âme horizontale et deux branches latérales verticales. Selon l'invention, les rigoles 125 et 145 définissent des canaux de distribution électriques destinés à recevoir des câbles électriques. Ceci est visible sur la figure 2, sur laquelle on peut voir que la rigole supérieure 125 reçoit trois câbles électriques courant fort 52 et la rigole inférieure 145 reçoit trois câbles courant faible 51. Grâce à la présence des brides 12 et 14, les câbles 51 et 52 sont reçus à l'intérieur des rigoles sans pouvoir en sortir du fait de la simple gravité. Les ouvertures par lesquelles les câbles peuvent être insérés dans les rigoles sont disposées dans des plans horizontaux et non pas verticaux comme c'est le cas dans les goulottes de l'art antérieur. En effet, l'ouverture d'insertion de la rigole supérieure 125 est définie entre le bord 121 et la partie supérieure 111 et l'ouverture d'insertion de la rigole inférieure 145 est définie entre le bord 141 et la partie inférieure 112. Ainsi, les câbles peuvent être disposés à l'intérieur des rigoles en reposant au fond des rigoles formées par les âmes 13 et 15. Les rigoles 145 définissent des canaux susceptibles de contenir un liquide. Les câbles 51, 52 peuvent ainsi reposer de manière stable dans les rigoles du seul fait de la gravité.

La face inférieure de l'âme 15 est destinée à venir en contact du sol.

L'extrémité supérieure de la partie supérieure 111 du fond 11 forme la partie la plus haute du rail en contact du mur.

La bride 14 est plus éloignée du fond 11 que la bride 12. Ainsi, la rigole inférieure 145 est plus large que la rigole supérieure 125. Par conséquent, le rail est plus épais en bas qu'en haut.

On peut remarquer que l'âme 15 est profilée de sorte qu'elle ne sera pas en contact du sol sur toute son étendu.

L'élément de couvercle 2 peut être réalisé en métal ou de préférence en matière plastique. L'élément de couvercle se présente sous la forme d'une longue plaque en forme de bande sensiblement plane. L'élément de couvercle comprend une face avant 21, une face arrière 22, une extrémité supérieure 23 et une extrémité inférieure 24. L'extrémité supérieure 23 se présente sous la forme d'une bride d'appui qui forme un rabat supérieur orienté pratiquement à angle droit par rapport au restant de l'élément de couvercle. On peut également envisager de former l'extrémité supérieure de l'élément de couvercle de manière inclinée. La face avant peut être délimitée en plusieurs secteurs à savoir un secteur inférieur 27 qui s'étend sensiblement verticalement, un secteur intermédiaire 26 légèrement incliné vers le mur et un secteur supérieur 25 à nouveau vertical. La bride d'appui 23 s'étend sensiblement à angle droit dans le prolongement du secteur supérieur 25. Etant donné que le secteur intermédiaire 26 est légèrement incliné, le secteur supérieur 25 est plus proche du mur que le secteur inférieur 27. La face avant 21, hormis le fait que la section intermédiaire 26 est inclinée, présente une configuration sensiblement plane sans élément saillant. On peut tout de fois imaginer qu'un ou plusieurs secteurs soit formés avec une ou plusieurs nervures de renforcement ou esthétiques. La face arrière 22 de l'élément de couvercle 2 est pourvue de deux cornières de fixation 28 et 29 qui présentent chacune un bord libre inférieur qui pointe vers le bas. Ainsi, un logement est défini entre chaque cornière et la face arrière 22. Plus précisément, une cornière dite supérieure 28 comprend un bord libre inférieur 282 et une cornière dite inférieure 29 comprend un bord libre inférieur 291. La cornière 28 forme avec la face arrière 22 un logement 281 définissant une ouverture d'accès au niveau du bord libre 282 de manière similaire, la cornière 29 forme un logement 291 dont l'ouverture d'accès est définie au niveau du bord libre 292. Le logement 281 est plus grand que le logement 291. Le logement 281 est défini au niveau du secteur intermédiaire 26 alors que le logement inférieur 291 est défini au niveau du secteur inférieur 27. La cornière 28 est connectée à la face arrière 22 au niveau de la jonction entre le secteur intermédiaire 26 et le secteur supérieur 25. La cornière inférieure 29 est reliée à la face arrière 22 sensiblement au niveau de la jonction entre le secteur intermédiaire 26 et le secteur inférieur 27.

La figure 2 représente l'élément de couvercle 2 monté sur le rail 1. Le couvercle 2 coopère avec le rail 1 de la manière suivante. Le bord libre supérieur 121 de la bride 12 formant le profil d'encliquetage 122 est engagé et en prise à l'intérieur du logement 181 formé par la cornière 28. Le profil d'encliquetage 122 est en prise encliquetée avec la nervure d'encliquetage 283 formée par le bord libre inférieur 282 de la cornière 28. Le bord libre 141 de la bride 14 est engagé dans le logement 291 de la cornière 29. Plus précisément, le bord inférieur 292 de la cornière 29 appuie la bride 14 contre la face arrière 22 du secteur inférieur 27.

Il n'y a avantageusement aucun jeu entre la bride 14 et l'élément de couvercle 2 à l'intérieur du logement 291. En revanche, il subsiste un intervalle 261 entre la bride 12 et la face arrière 22. Il n'y a cependant pas de flottement de la bride 12 à l'intérieur du logement 281, du fait que le bout 231 de la bride d'appui 23 est destiné à venir en contact d'appui contre le mur. Etant donné que l'élément de couvercle est maintenu sans jeu horizontal au niveau de la bride 14 et que la bride d'appui 23 est en contact du mur, cela a pour effet de solliciter la nervure d'encliquetage 282 en prise encliquetée avec le profil d'encliquetage 122 de la bride 12. La partie de l'élément de couvercle située entre la bride d'appui 23 et le secteur inférieur 27 présente avantageusement une certaine élasticité apte à ramener la cornière 28 en prise avec la bride 12. Ainsi l'intervalle 261 située entre la bride 12 et le secteur intermédiaire 26 permet d'une part l'insertion du profil d'encliquetage 22 dans le logement 281 et garantit une certaine élasticité de l'élément de couvercle à ce niveau. L'élément de couvercle est par conséquent constamment sous contrainte lorsqu'il est monté sur un rail fixé au mur au niveau du sol. L'insertion du profil d'encliquetage 122 à l'intérieur du logement 281 est limitée par le bord libre 141 de la bride 14 qui vient en buté au fond du logement 291 comme on peut le voir sur la figure 2.

L'insertion de la bride 14 dans le logement 291 assure d'une part un maintien horizontal et d'autre part une limitation verticale vers le bas. L'insertion de la bride 12 dans le logement 281 assure la fixation de l'élément de couvercle contre un arrachement vertical. Le contact de la bride 23 contre le mur assure une bonne prise encliquetée de la bride 12 dans le logement 281.

A partir de la structure du rail et de l'élément de couvercle qui vient d'être décrite, on peut aisément comprendre que la mise en place de l'élément de couvercle 2 sur le rail 1 s'effectue par emboîtement vertical de l'élément de couvercle sur le rail en le rapportant sensiblement verticalement sur le rail sensiblement parallèlement au mur. En effet, pour pouvoir engager les brides 12 et 14 dans leurs logements respectifs 181 et 191, il est nécessaire de faire descendre verticalement l'élément de couvercle 2 le long du mur avec une orientation sensiblement verticale. Pour garantir l'engagement des brides 12 et 14 dans leurs logements respectifs, lors du montage de l'élément de couvercle il suffit que la bride d'appui 23 se déplace en contact du mur et que la face arrière 22 au niveau du secteur inférieur 27 soit au contact de la bride 14. Il suffit ensuite de faire descendre l'élément de couvercle, guidé par la bride d'appui 23 et le secteur inférieur 27. Le coulissement vertical continue jusqu'à ce que les brides 12 et 14 pénètrent dans leurs logements respectifs. Afin que le profil d'encliquetage 122 atteigne sa position d'encliquetage au-dessus de la nervure d'encliquetage 282, il suffit d'appuyer un peu plus fort sur la bride d'appui 23, ce qui a pour effet de déformer légèrement les secteurs 25 et 26 vers le rail 1 jusqu'à ce que le profil 22 passe au dessus de la nervure 282. Les secteurs 25 et 26 peuvent alors se détendre légèrement ce qui a pour effet de créer l'intervalle 261. Toutefois, les secteurs 25 et 26 restent légèrement précontraints pour garantir un bon encliquetage. Bien que l'élément de couvercle 2 soit mis en place par emboîtement vertical, il obture néanmoins les ouvertures horizontales des rigoles de distribution électriques comme on peut le voir sur la figure 2. Le secteur intermédiaire 26 relie la bride 14 à la bride 12 et le secteur 25 avec sa bride d'appui 23 ferment la rigole supérieure 125. On peut également noter que l'extrémité inférieure 24 de l'élément de couvercle n'est pas en contact de l'âme 15 : au contraire, un petit logement 154 est formé entre l'élément de couvercle 2 et l'âme 15.

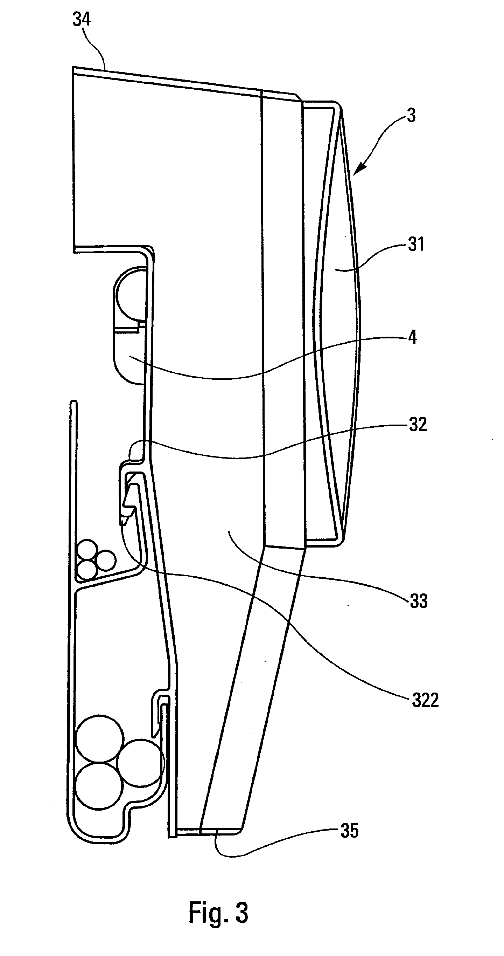

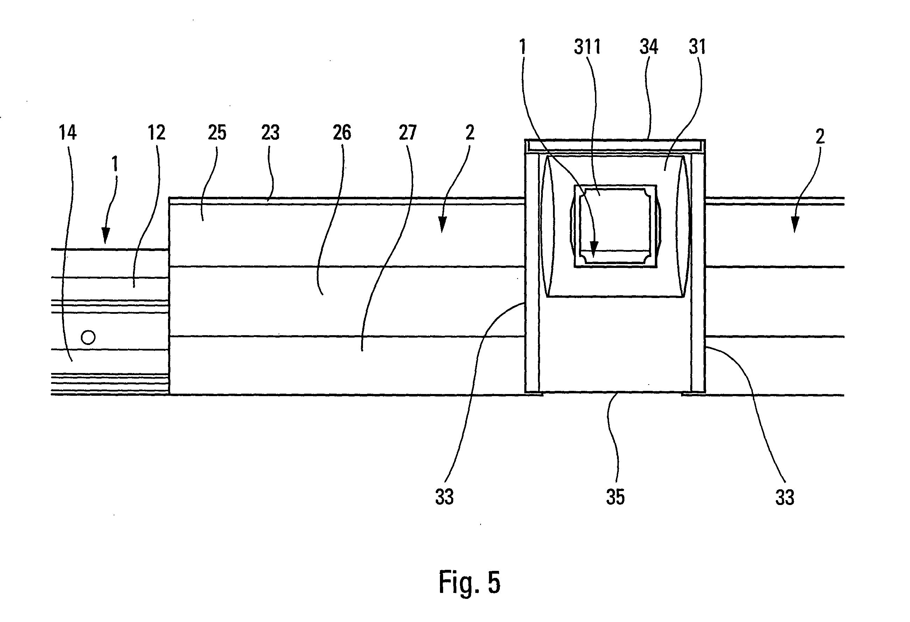

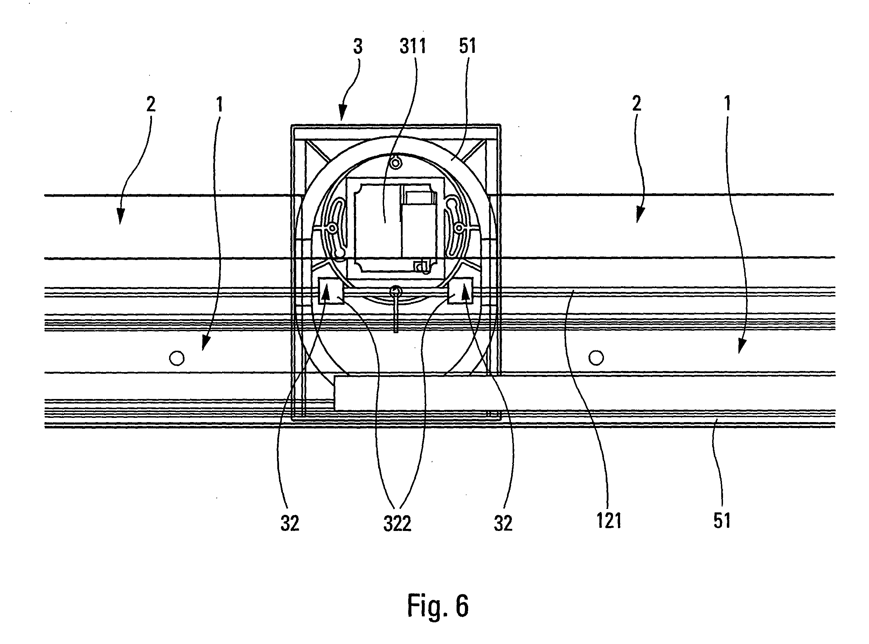

Le support de prise 3 visible sur la figure 3 peut être fixé sur le rail sensiblement de la même manière que l'élément de couvercle 2. Comme on peut le voir sur la figure 3, mais également de manière plus claire sur la figure 6, l'élément de prise 3 est pourvu de moyens d'ancrage sous la forme de deux crochets 32 formant chacun un nez d'encliquetage 322 destiné à venir en prise avec le profil d'encliquetage 122 formé par la bride supérieure 12. Le support de prise 3 est destiné a être monté de manière a ce que l'élément de couvercle passe derrière le support de prise. Selon une forme de mise en oeuvre pratique, le support de prise est fixé sur le rail entre deux éléments de couvercle. Cependant les bords adjacents des deux éléments de couvercle sont certes espacés l'un de l'autre mais passe derrière le support de prise. Ceci est visible sur la figure 5 au niveau du sol, ainsi, il n'est pas nécessaire de couper les éléments de couvercle avec une grande précision du fait qu'ils sont de toute façon masqués par le support de prise. Pour obtenir une bonne finition, le support de prise comprend des parois latérales 33 dont le bord arrière présente un contour identique au profil de l'élément de couvercle 2, ceci est visible sur la figure 3. En outre, le support de prise comprend une paroi supérieure 34 qui s'étend jusqu'au contact du mur. De préférence, le support de prise est plus haut que l'élément de couvercle de sorte qu'il masque même partiellement la bride d'appui 23. De manière classique, le support de prise 3 comprend un plastron avant 31 formant une ouverture de réception 311 pour un connecteur électrique 4, telle qu'une prise. Ceci est plus visible sur les figures 5 et 6. Selon une autre caractéristique du support de prise, celui-ci définit un espace de lovage interne qui s'étend sensiblement le long des parois internes du support de prise comme on peut le voir sur la figure 6. Cet espace de lovage est destiné à recevoir une longueur de câble 51 ou 52 de sorte qu'il est possible de déplacer ultérieurement la prise sans avoir à refaire le câblage. On peut également remarquer en se référant à la figure 3 que la paroi inférieure 35 du support de prise s'arrête au-dessus de l'extrémité inférieure 24 de l'élément de couvercle 2.

Ainsi, le support de prise 3 peut être fixé sur le rail avec le même emboîtement vertical que l'élément de couvercle 2. Il suffit de faire glisser verticalement le support de prise avec la paroi supérieure 34 contre le mur et la paroi inférieure 35 contre l'élément de couvercle 2. Les crochets d'encliquetage 32 vont alors automatiquement venir en prise avec le profil d'encliquetage 122 de la bride 12.

Le retrait du support de prise 3 est très aisé, étant donné que sa paroi inférieure 35 est décollée du sol. A l'aide d'un simple tournevis, que l'on fait tourner sur lui-même, il est possible de soulever le support de prise et ainsi désengager ses crochets 32. Il est également possible de retirer très facilement l'élément de couvercle 2 en engageant un tournevis sous l'extrémité inférieure 24. L'engagement d'un ustensile quelconque sous l'extrémité 24 est rendu possible du fait de la présence du petit logement 154.

Grâce à l'invention, la plinthe offre un espace de rangement confortable et aisé pour les câbles ainsi qu'un montage très aisé puisque effectué du haut vers le bas.

## Revendications

1. Plinthe électrique comprenant un rail (1) destiné à être fixé à un mur, et un élément de couvercle (2) destiné à être monté sur le rail, le rail (1) comprenant des moyens d'accrochage (12), (14) et l'élément de couvercle (2) comprenant des moyens de fixation (28, 29) destinés à coopérer avec les moyens d'accrochage par emboîtement vertical en rapportant l'élément de couvercle sensiblement verticalement sur le rail sensiblement parallèlement au mur, **caractérisée en ce qu'**elle comprend en outre un support de prise (3) destiné à être monté sur le rail (1), ledit support (3) comprenant des moyens de maintien (32) destinés à coopérer avec les moyens d'accrochage (12) du rail (1) par emboîtement vertical en rapportant le support sensiblement verticalement sur le rail sensiblement parallèle au mur.

2. Plinthe électrique selon la revendication 1, dans laquelle les moyens de maintien (32) du support de prise (3) comprennent un profil de d'ancrage (322) pour une fixation au rail et des éléments de parois (33, 34) destinés à venir en appui sur un ou deux élément(s) de couvercle adjacent(s) et sous-jacentes) monté(s) sur ledit rail.

3. Plinthe électrique selon l'une quelconque des revendications 1 et 2, dans laquelle le support de prise (3) définit intérieurement un espace de lovage de câble.

4. Plinthe électrique selon la revendication 1, 2 ou 3, dans laquelle l'élément de couvercle (2) masque complètement le rail (1).

5. Plinthe électrique selon l'une quelconque des revendications précédentes, dans laquelle le rail (1) comprend une partie supérieure (111) destinée à s'étendre le long du mur, l'élément de couvercle (2) contenant une bride d'appui (23) destinée à venir en contact du mur au-dessus de la partie supérieure (111) du rail de manière à la masquer.

6. Plinthe électrique selon l'une quelconque des revendications précédentes, dans laquelle le rail (1) comprend au moins une bride frontale longitudinale (12, 14) qui s'étend dans un plan sensiblement vertical lorsque le rail est fixé horizontalement à un mur, ladite bride comprenant un bord longitudinal (121, 141) libre formant les moyens d'accrochage, le rail (1) formant au moins une rigole de distribution (125, 145) de câbles électriques (51, 52), ladite bride longitudinale (121, 141) formant une partie de ladite rigole, ledit bord longitudinal délimitant une ouverture longitudinale d'insertion de câble dans la rigole de distribution.

7. Plinthe électrique selon la revendication 6, dans laquelle ladite au moins une rigole (125, 145) présente une section transversale verticale en forme de U ou de V disposé debout lorsque le rail est fixé à un mur.

8. Plinthe électrique selon la revendication 6 ou 7, dans laquelle le bord libre (121) de la bride (12) forme des moyens d'encliquetage (122).

9. Plinthe électrique selon l'une quelconque des revendications précédentes, dans laquelle le rail (1) forme deux rigoles superposées (125, 141), chaque rigole comprenant une bride longitudinale frontale (12, 14) formant un bord libre (121, 141), le bord libre (121) d'une rigole (125) formant les moyens d'encliquetage (122) et le bord libre de l'autre rigole (145) formant des moyens de retenue.

10. Plinthe électrique selon l'une quelconque des revendications 6 à 9, dans laquelle les moyens de fixation de l'élément de couvercle (2) comprennent au moins un profil de fixation (28, 29) destiné à coopérer avec le bord libre (121, 141) de ladite au moins une bride frontale (12, 14) du rail (1).

11. Plinthe électrique selon la revendication 10, dans laquelle un profil de fixation comprend une cornière d'encliquetage (28) destinée à venir en prise encliquetée avec un bord de bride correspondant (121) formant des moyens d'encliquetage correspondants (122).

12. Plinthe électrique selon la revendication 10 ou 11, dans laquelle un profil de fixation comprend une cornière de retenue (29) destinée à venir en prise avec un bord de bride correspondant (141) formant des moyens de retenue correspondants.

13. Plinthe électrique selon la revendication 10, 11 ou 12, dans laquelle l'élément de couvercle (2) comprend une face avant (21) et une face arrière (22), une extrémité supérieure (23) et une extrémité inférieure (24), ledit au moins un profil de fixation (28, 29) faisant saillie à partir de la face arrière (22), un intervalle (21) étant présent entre la face arrière (22) et le rail (1) au niveau d'au moins un profil de fixation (28).

14. Plinthe électrique selon la revendication 13, dans laquelle l'élément de couvercle (2) comprend deux profils de fixation (28, 29), un profil supérieur (28) et un profil inférieur (29) , la face arrière (22) étant en contact du rail (1) au niveau d'un profil (29).

15. Plinthe électrique selon la revendication 14, dans laquelle l'élément de couvercle (2) forme une bride d'appui (23) destinée à venir en appui contre le mur au-dessus dudit rail (1), le profil inférieur (29) étant en prise avec le rail (1) de manière à solliciter le profil supérieur (28) en éloignement du rail.
